# EUROPEAN PATENT APPLICATION

(11) **EP 2 654 312 A2**
(43) Date of publication of application: **23.10.2013**
(21) Application number: 12190423.9
(22) Date of filing: 29.10.2012
(51) Int. Cl.: H04N 21/41, H04N 21/431, H04N 21/426

(54) **Transmitter, transmitting method, and display control system**

(30) Priority: 20.04.2012 JP 2012096948
(71) Applicant: Kabushiki Kaisha Toshiba, Tokyo 105-8001 (JP)
(72) Inventor: Tsuchiuchi, Takayasu, Tokyo, 105-8001 (JP)
(74) Representative: Henkel, Breuer & Partner

(57) **Abstract**

According to one embodiment, a transmitter (200) includes: a plurality of tuners (201a to 201c); a controller (206); an acquisition module (202, 206a); and a transmitting module (203). The tuners (201a to 201c) are capable of receiving broadcast data containing broadcast video. The controller (206) controls the tuners (201a to 201c) to receive the broadcast data on a main channel that is a channel being displayed on a display device (216) and on a sub channel that is at least one of channels not being displayed on the display device (216). The acquisition module (202, 206a) acquires related information on the broadcast video for each of the broadcast data thus received. The transmitting module (203) transmits the related information corresponding to the sub channel to an information processor (300).

## Description

### FIELD

Embodiments described herein relate generally to a transmitter, a transmitting method, and a display control system.

### BACKGROUND

Conventionally, there has been developed a technology for causing an information processor, such as a computer, to display related information on broadcast video being displayed on a broadcast wave receiver, such as a television.

In the technology, it is preferable that an information processor be capable of displaying related information on broadcast video on a channel besides a channel whose broadcast video is being displayed by a broadcast wave receiver.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary explanatory diagram of a schematic configuration of a display control system comprising a receiver and an information processor according to an embodiment;
FIG. 2 is an exemplary block diagram of the system comprising the receiver and the information processor in the embodiment;
FIG. 3 is an exemplary block diagram of a tuner, a demultiplexer, a controller, and a video and audio reproducer provided to the receiver in the embodiment;
FIG. 4 is an exemplary schematic diagram of a configuration of destination information database stored in a storage module of the receiver in the embodiment;
FIG. 5 is an exemplary flowchart of display processing of broadcast video in the receiver and display processing of related information in the information processor in the embodiment;
FIG. 6 is an exemplary flowchart of display processing of broadcast video in the receiver and display processing of related information in the information processor in the embodiment;
FIG. 7 is an exemplary diagram for explaining processing for transmitting related information from the receiver to the information processor in the embodiment;
FIG. 8 is an exemplary schematic diagram of related information displayed on the information processor in the embodiment; and
FIG. 9 is another exemplary schematic diagram of related information displayed on the information processor in the embodiment.

### DETAILED DESCRIPTION

In general, according to one embodiment, a transmitter comprises: a plurality of tuners; a controller; an acquisition module; and a transmitting module. The tuners are configured to be capable of receiving broadcast data containing broadcast video. The controller are configured to control the tuners to receive the broadcast data on a main channel that is a channel being displayed on a display device and on a sub channel that is at least one of channels not being displayed on the display device. The acquisition module is configured to acquire related information on the broadcast video for each of the broadcast data thus received. The transmitting module is configured to transmit the related information corresponding to the sub channel to an information processor.

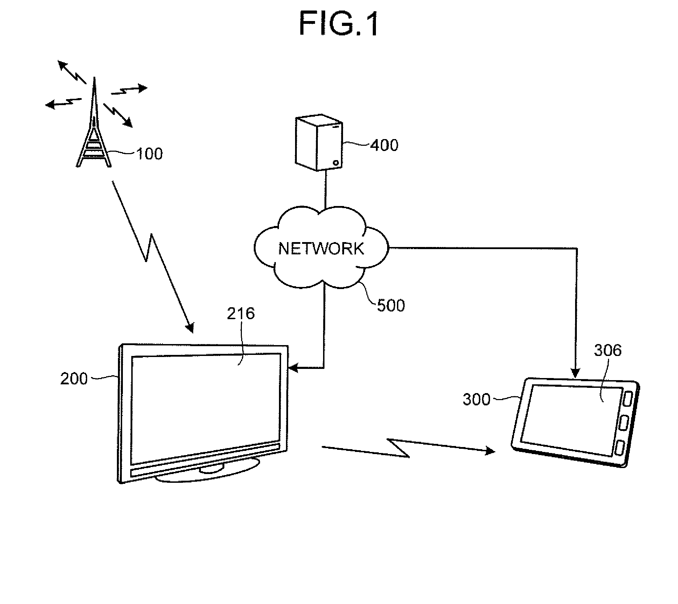

FIG. 1 is a view for explaining a schematic configuration of an example of a display control system comprising a transmitter and an information processor according to an embodiment. In the present embodiment, as illustrated in FIG. 1, an information transmission system comprises a broadcast base station 100, a receiver 200, an information processor 300, and a server 400, for example. The receiver 200, the information processor 300, and the server 400 are electrically connected via a wired or wireless network 500 (an electric telecommunication line), and transmit and receive data to and from one another. The receiver 200 is a television receiver, for example. The receiver 200 may not comprise a display, but may output data to a video display device or the like (not illustrated) connected to the receiver 200. The information processor 300 is a desktop, a laptop, or a tablet computer, a smartphone, a smartbook, a mobile phone, or a personal digital assistant (PDA), for example.

The broadcast base station 100 transmits broadcast data (a broadcast wave and a broadcast signal) containing broadcast video, such as a broadcast program, for each channel. The broadcast base station 100 transmits broadcast video on each channel as stream in the moving picture experts group2-transport stream (MPEG2-TS) format, for example. The broadcast base station 100 also transmits related information on broadcast video on each channel. The broadcast base station 100, for example, transmits related information described in a format, such as hypertext markup language (HTML), cascading style sheets (CSS), and JavaScript (registered trademark). If related information is transmitted from the server 400, the broadcast base station 100 transmits broadcast data containing source information for identifying a source of the related information (the server 400) for each channel. The source information may be the uniform resource locator (URL) of a source of the related information, for example.

The server 400 transmits related information on broadcast video on each channel transmitted by the broadcast base station 100. In the present embodiment, the related information may be superimposed on broadcast data and transmitted by the broadcast base station 100, may be transmitted by the server 400 via the network 500, or may be transmitted by the both of them. Examples of the contents of the related information include information related to the contents of a broadcast program (e.g., cast information, related program information, and subtitles in a language not being contained in the MPEG2-TS of broadcast data) and video data superimposed on broadcast video of the broadcast data to enhance image quality of the broadcast video.

The stream superimposed on the broadcast data contains elementary stream (ES), such as video and audio, and program specific information (PSI)/service information (SI) related to the ES. The PSI/SI contains output device information, for example. The output device information contains an identifier indicating a display on which the related information transmitted from the broadcast base station 100 and the server 400 is displayed and an identifier indicating a display on which broadcast video in the TS stream containing a packet of the output device information is displayed, for example.

The output device information may be defined as an identifier indicating "output to an display of a receiver, output to a display of an information processor, or output to the displays of both the receiver and the information processor" as output device information on a table prepared in the PSI/SI, such as an output device information table (OIT), or an existing table, such as an application information table (AIT) defined by TS 102 809 of digital video broadcasting (DVB), for example.

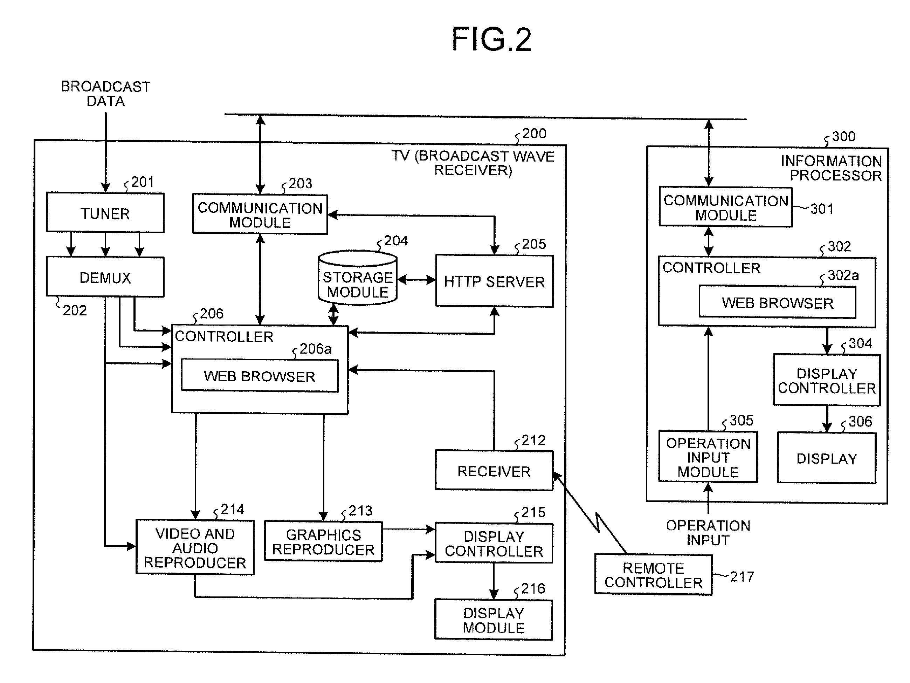

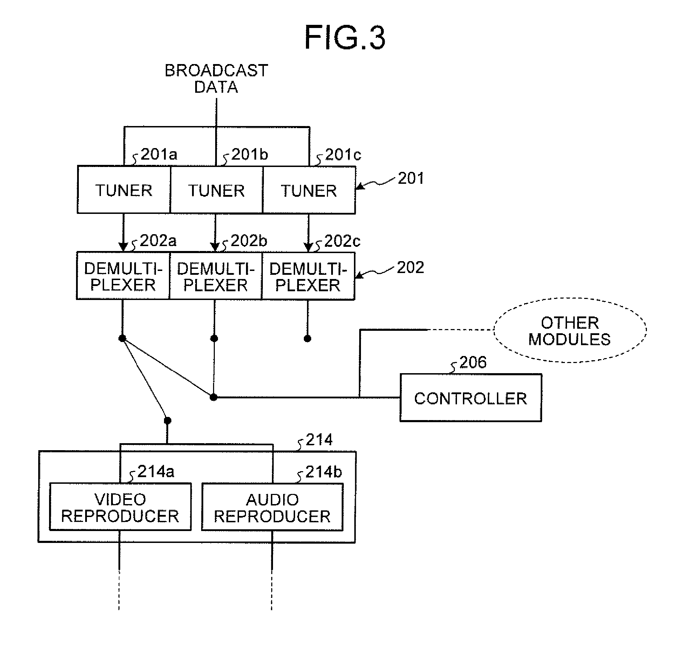

FIG. 2 is a block diagram of an example of the system comprising the receiver and the information processor in the present embodiment. FIG. 3 is a block diagram of an example of a tuner, a demultiplexer, a controller, and a video and audio reproducer provided to the receiver in the present embodiment. In the present embodiment, the receiver 200 comprises a tuner 201, a demultiplexer (a DEMUX) 202, a communication module 203, a storage module 204, a hypertext transfer protocol (HTTP) server 205, a controller 206, a receiving module 212, a graphics reproducer 213, a video and audio reproducer 214, a display controller 215, and a display 216, for example.

The tuner 201 comprises a plurality of tuners each capable of receiving broadcast data. In the present embodiment, as illustrated in FIG. 3, the tuner 201 comprises three tuners 201a to 201c each capable of receiving broadcast data on a plurality of channels (three channels in the present embodiment). The channels include a main channel, which is a channel being displayed on the display 216 of the receiver 200. The channels may also include a sub channel, which is at least one of the channels not being displayed on the display 216.

The DEMUX 202 separates various types of data from the broadcast data received by the tuner 201. In the present embodiment, as illustrated in FIG. 3, the DEMUX 202 comprises demultiplexers 202a to 202c that separate various types of data from the broadcast data received by the tuners 201a to 201c, respectively, for each tuner provided to the tuner 201. Broadcast video and audio separated by the DEMUX 202 are transmitted to the video and audio reproducer 214. By contrast, output device information, related information, source information, and other information separated (acquired) by the DEMUX 202 are transmitted to the controller 206.

When transmitting the related information or the source information to the controller 206, the DEMUX 202 adds tuner information (a tuner ID) for identifying a tuner that receives broadcast data containing the related information or the source information among the tuners 201a to 201c.

The communication module 203 communicates with an external device. Specifically, the communication module 203 receives related information from the server 400. If the communication module 203 receives related information, the communication module 203 outputs the related information to the controller 206. Furthermore, if related information or destination information for identifying a destination of the related information is received from the controller 206, the communication module 203 transmits the related information to the destination identified by the destination information. In the present embodiment, the communication module 203 functions as a transmitting module that transmits related information on a sub channel to the information processor 300. The communication module 203 transmits related information on at least one of the main channel and the sub channel to the information processor 300.

Furthermore, the communication module 203 receives a connection request for requesting transmission and reception of data, a reception request for requesting reception of broadcast data on the sub channel, and other requests from the information processor 300.

The connection request contains destination information for identifying the information processor 300 that transmits the connection request, a window ID of a window provided for each radio wave that receives broadcast data, and a tab ID for identifying a tab that displays related information on broadcast video contained in broadcast data on the main channel in the window identified by the window ID. While the connection request contains the tab ID in the present embodiment, it is not limited thereto. Alternatively, the connection request may contain a tag of the related information on the broadcast video contained in the broadcast data on the main channel.

By contrast, the reception request contains destination information for identifying the information processor 300 that transmits the reception request, channel information indicating the sub channel that receives broadcast data, a window ID for identifying a window provided for each radio wave that receives broadcast data, and a tab ID for identifying a tab that displays related information on broadcast video contained in broadcast data on the sub channel in the window identified by the window ID. In the present embodiment, the communication module 203 functions as a receiver that receives the channel information indicating the sub channel that receives the broadcast data from the information processor 300. While the reception request contains the tab ID in the present embodiment, it is not limited thereto. Alternatively, the reception request may contain a tag of the related information on the broadcast video contained in the broadcast data on the sub channel.

The controller 206 controls the tuners 201a to 201c so as to receive the broadcast data on the main channel and the sub channel. Furthermore, the controller 206 receives output device information and related information, and controls the display 216 so as to display the related information based on the output device information. In the present embodiment, if the output device information indicates that the display 216 is caused to display the related information, the controller 206 outputs the related information to the graphics reproducer 213. By contrast, if the output device information indicates that the display 306 is caused to display the related information, the related information is transmitted to the information processor 300 from the communication module 203.

The controller 206 comprises a web browser 206a. The web browser 206a comprises a JavaScript (registered trademark) processor, an HTML processor, a video and audio element processor, an application program interface (API) processor, a CSS processor, and the like (none of which is illustrated) . The web browser 206a acquires related information from the source identified by the source information via the communication module 203. The web browser 206a then outputs the related information thus acquired to the graphics reproducer 213. In the present embodiment, for example, the DEMUX 202, or the DEMUX 202 and the web browser 206a function as an acquisition module that acquires related information for each broadcast data.

The HTTP server 205 is a module having a typical web server function. The HTTP server 205 outputs related information and the like stored in the storage module 204 to the web browser 206a in response to a request from the web browser 206a.

The storage module 204 stores therein related information separated (acquired) from the broadcast data by the DEMUX 202 and related information acquired by the web browser 206a. Furthermore, in the present embodiment, the storage module 204 stores therein a destination information database (DB) that stores therein information on a destination of the related information thus acquired.

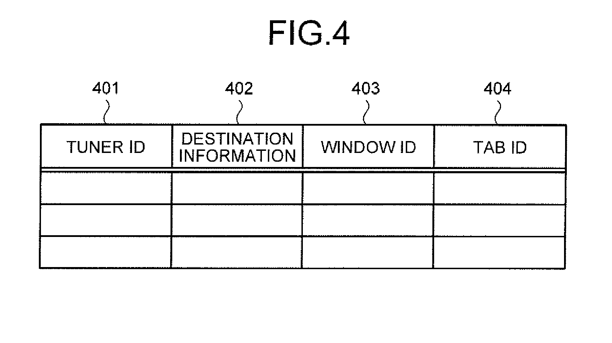

FIG. 4 is a schematic diagram of a configuration of the destination information database stored in the storage module of the receiver in the present embodiment. As illustrated in FIG. 4, the destination information DB stores therein destination information 402, a window ID 403, and a tab ID 404 in a manner associated with a tuner ID 401 of the tuners 201a to 201c provided to the tuner 201. The destination information 402 is information, such as a combination of an Internet address (an Internet protocol (IP) address) and a port number, for identifying the information processor 300 serving as a destination of related information, for example. The window ID 403 is information for identifying a window provided for each radio wave, such as broadcasting satellite (BS), communications satellite (CS), and terrestrial digital broadcasting, for example. The tab ID 404 is information for identifying a tab that displays related information in the window identified by the window ID 403.

Referring back to FIG. 2 and FIG. 3, the video and audio reproducer 214 comprises a video reproducer 214a and an audio reproducer 214b, and decodes broadcast video and audio data, and the like received from the DEMUX 202. The graphics reproducer 213 generates display data in a format capable of being processed by the display controller 215 from the related information received from the controller 206 and described in a format, such as HTML, CSS, and JavaScript (registered trademark).

The display controller 215 superimposes the broadcast video decoded by the video and audio reproducer 214 and the display data generated by the graphics reproducer 213, and converts the video into a video signal in a format capable of being displayed by the display 216. The display 216 then uses the video signal to display the video.

The receiving module 212 receives a wireless signal (e.g., an infrared signal) from a remote controller 217 (an external operating device). In the present embodiment, the receiving module 212 receives a wireless signal indicating the main channel to be displayed on the display 216 among channels whose broadcast data is received by the tuner 201 from the remote controller 217.

In the present embodiment, as illustrated in FIG. 2, the information processor 300 comprises a communication module 301, a controller 302, a display controller 304, an operation input module 305, and a display 306, for example.

The communication module 301 transmits and receives data to and from other devices (e.g., the receiver 200 and the server 400). In the present embodiment, the communication module 301 functions as a receiver that receives related information transmitted from the receiver 200. The communication module 301 outputs the related information thus received to the controller 302.

The controller 302 comprises a web browser 302a. The web browser 302a comprises a JavaScript (registered trademark) processor, an HTML processor, a video and audio element processor, an API processor, a CSS processor, and the like (none of which is illustrated), and outputs the related information thus received to the display controller 304.

The display controller 304 causes the display 306 to display the related information thus received. In the present embodiment, the display controller 304 generates display data in a format capable of being displayed by the display 306 from the related information in a format, such as HTML, CSS, and JavaScript (registered trademark), received from the controller 302. The display 306 then uses the display data thus generated to display the video.

The operation input module 305 (e.g., a touch panel (a touch sensor), a keyboard, a button, a mouse, and a switch) generates data based on operation input performed by an operator (e.g., a user).

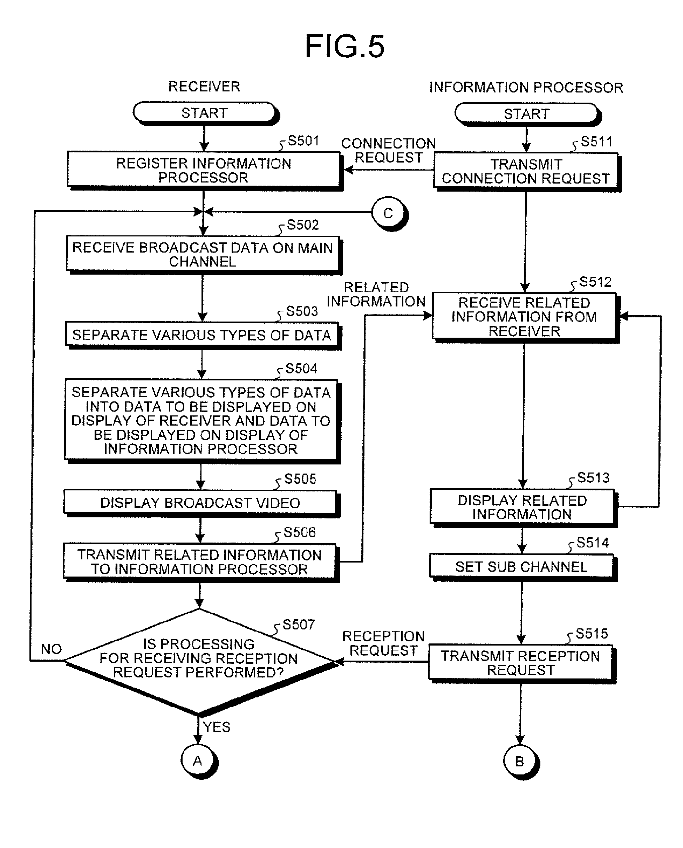

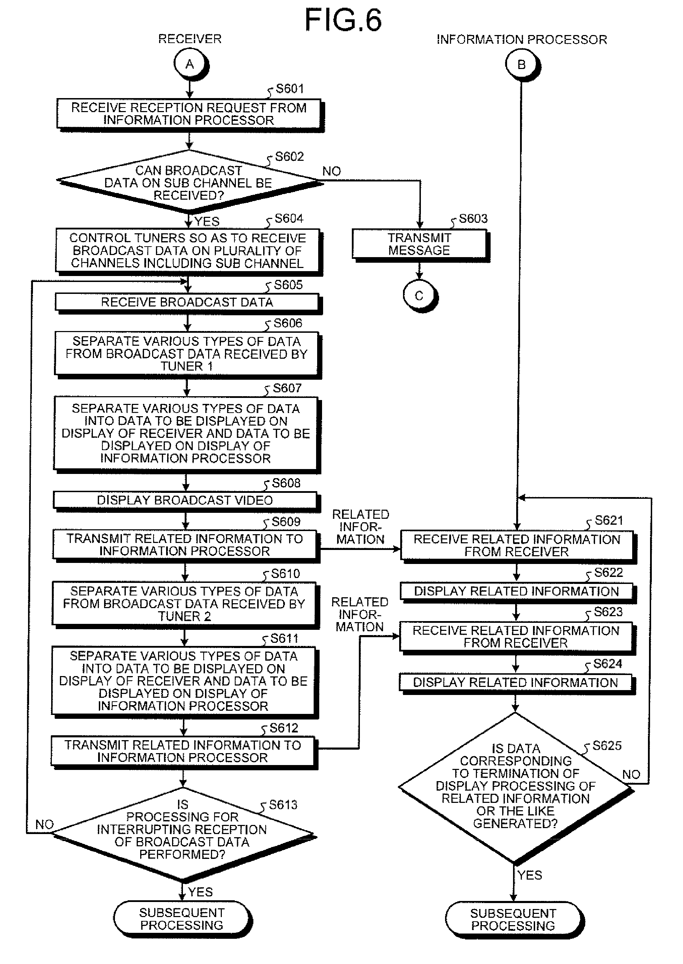

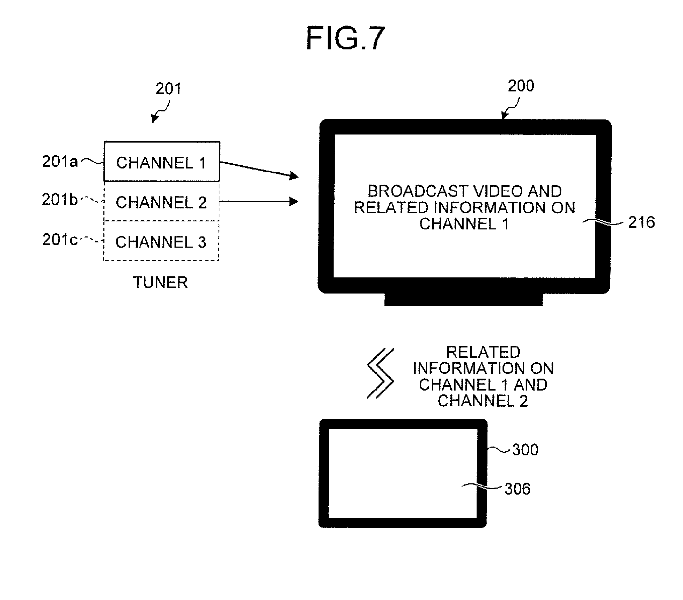

An example of a flow of display processing of broadcast video in the receiver 200 and display processing of related information in the information processor 300 will now be described with reference to FIG. 5 to FIG. 7. FIG. 5 and FIG. 6 are flowcharts of an example of the display processing of broadcast video in the receiver and the display processing of related information in the information processor in the present embodiment. FIG. 7 is a view for explaining processing for transmitting related information from the receiver to the information processor in the present embodiment.

The display processing of broadcast video in the receiver 200 illustrated in FIG. 5 will now be described. If the communication module 203 receives a connection request from the information processor 300, the controller 206 registers the information processor 300 to be connected to the receiver 200 via the network 500 (S501). In the present embodiment, the controller 206 stores destination information, a window ID, and a tab ID contained in the connection request thus received in the destination information DB in association with a tuner ID of a tuner that receives broadcast data on the main channel (e.g., a channel 1), thereby registering the information processor 300.

While the receiver 200 is operating, the tuner 201 uses the tuner 201a (a tuner 1) to receive the broadcast data on the main channel indicated by a wireless signal received by the receiving module 212 (S502). The DEMUX 202 separates various types of data from the broadcast data received by the tuner 201a (S503). In the present embodiment, if various types of data are separated from the broadcast data received by the tuner 201a, the DEMUX 202 separates the various types of data thus separated into data (e.g., broadcast video, related information, and source information) to be displayed on the display 216 of the receiver 200 and data (e.g., related information and source information) to be displayed on the display 306 of the information processor 300 based on output device information contained in the broadcast data (S504).

If the data to be displayed on the display 216 of the receiver 200 contains broadcast video, the video and audio reproducer 214 decodes the broadcast video. The display controller 215 causes the display 216 to display the broadcast video thus decoded (S505). If the data to be displayed on the display 216 of the receiver 200 contains related information, the controller 206 outputs the related information to the graphics reproducer 213. If the data to be displayed on the display 216 of the receiver 200 contains source information, the web browser 206a acquires related information from a source (the server 400) identified by the source information, and outputs the related information thus acquired to the graphics reproducer 213. Subsequently, as illustrated in FIG. 7, the display controller 215 uses a video signal obtained by superimposing the broadcast video thus decoded and the display data generated from the related information by the graphics reproducer 213 to cause the display 216 to display the video.

By contrast, if the data to be displayed on the display 306 of the information processor 300 contains related information, the communication module 203 refers to the destination information DB stored in the storage module 204, and transmits the related information to the information processor 300 identified by destination information stored in association with a tuner ID added to the related information (S506). In the present embodiment, the communication module 203 transmits a window ID and a tab ID stored in the destination information DB in a manner associated with the tuner ID added to the related information along with the related information. If no information processor 300 connected via the network 500 is registered, the controller 206 destroys the related information thus acquired.

If the data to be displayed on the display 306 of the information processor 300 contains source information, the web browser 206a acquires related information from a source (e.g., the server 400) identified by the source information. The communication module 203 refers to the destination information DB stored in the storage module 204, and transmits the related information thus acquired to the information processor 300 identified by destination information stored in association with a tuner ID added to the source information (S506). In the present embodiment, the communication module 203 transmits a window ID and a tab ID stored in the destination information DB in a manner associated with the tuner ID added to the source information along with the related information thus acquired.

Subsequently, the communication module 203 determines whether processing for receiving a reception request transmitted by the information processor 300 is performed (S507). If the communication module 203 determines that no processing for receiving a reception request is performed (No at S507), the tuner 201a repeats reception of the broadcast data on the main channel.

The display processing of an image in the information processor 300 illustrated in FIG. 5 will now be described. If the operation input module 305 generates data (a connection request) based on operation input performed by the operator, the controller 302 transmits the connection request thus generated to the receiver 200 via the communication module 301 (S511). In the present embodiment, the communication module 301 transmits the connection request to the receiver 200 via the network 500 in accordance with Institute of Electrical and Electronics Engineers (IEEE) 802.3 and IEEE 802.11, for example.

If the communication module 301 transmits the connection request to the receiver 200 and the receiver 200 registers the information processor 300, the communication module 301 receives data (related information) to be displayed on the display 306 of the information processor 300 among various types of data separated from the broadcast data on the main channel (e. g. , the channel 1) from the receiver 200 (S512). The web browser 302a analyzes the related information thus received, and transmits the related information to the display controller 304. In the present embodiment, the web browser 302a receives the window ID and the tab ID transmitted from the receiver 200 along with the related information, and transmits the window ID and the tab ID thus received to the display controller 304.

Thus, the display controller 304 causes the display 306 to display the related information (S513). In the present embodiment, the display controller 304 controls the display 306 such that the related information is displayed in the tab identified by the tab ID among tabs provided to the window identified by the window ID based on the window ID and the tab ID received from the web browser 302a.

The information processor 300 continues to receive related information and to display the related information until the operation input module 305 generates data corresponding to termination of the display processing of the related information or interruption of the display processing.

If the sub channel (e.g., a channel 2) is newly set by the operation input module 305 while the display processing of the related information is being performed (S514), the communication module 301 transmits a reception request for requesting reception of broadcast data on the sub channel thus newly set to the receiver 200 (S515).

The display processing of an image in the receiver 200 illustrated in FIG. 6 will now be described. The communication module 203 receives the reception request transmitted from the communication module 301 of the information processor 300 (S601). The controller 206 then determines whether the receiver 200 can receive the broadcast data on the sub channel indicated by channel information contained in the reception request thus received (S602). In the present embodiment, the controller 206 determines whether the receiver 200 can receive the broadcast data on the sub channel indicated by the channel information contained in the reception request thus received based on channels whose broadcast data is being received by the tuner 201 and on the number of tuners being used for receiving broadcast data among the tuners 201a to 201c.

If the sub channel indicated by the channel information contained in the reception request thus received is not included in the channels whose broadcast data is being received by the tuner 201 and there is no tuner not receiving broadcast data, the controller 206 determines that the receiver 200 fails to receive the broadcast data on the sub channel indicated by the channel information contained in the reception request thus received (No at S602). The controller 206 then transmits a message indicating that the receiver 200 fails to receive the broadcast data on the sub channel indicated by the channel information contained in the reception request to the information processor 300 via the communication module 203 (S603). If the information processor 300 receives the message from the receiver 200, the controller 302 transmits the message thus received to the display controller 304, which is not illustrated. The display controller 304 then causes the display 306 to display the message thus received.

By contrast, if the sub channel indicated by the channel information contained in the reception request thus received is included in the channels whose broadcast data is being received by the tuner 201 or there is a tuner not receiving broadcast data, the controller 206 determines that the receiver 200 can receive the broadcast data on the sub channel indicated by the channel information contained in the reception request thus received (Yes at S602). Subsequently, as illustrated in FIG. 7, the controller 206 controls the tuners 201a to 201c so as to receive broadcast data on a plurality of channels (e.g., the channels 1 to 3) including the sub channel indicated by the channel information contained in the reception request thus received (S604). Furthermore, the controller 206 stores destination information, a window ID, and a tab ID contained in the reception request in the destination information DB in association with a tuner ID of a tuner that receives the broadcast data on the sub channel.

While the controller 206 controls the tuners 201a to 201c to receive broadcast data on a plurality of channels including the sub channel indicated by the channel information contained in the reception request thus received in the present embodiment, it is not limited thereto. Alternatively, the controller 206 may control the tuners 201a to 201c so as to receive broadcast data on a plurality of channels including the sub channel of broadcast data containing broadcast video related to the broadcast video contained in the broadcast data on the main channel.

Subsequently, the tuner 201a (tuner 1) receives the broadcast data on the main channel (e.g., the channel 1) indicated by the wireless signal received by the receiving module 212, and the tuner 201b (a tuner 2) receives the broadcast data on the sub channel (e.g., the channel 2) indicated by the channel information contained in the reception request received by the communication module 203 (S605). The processing from S606 to S609 is identical to the processing from S503 to S506 illustrated in FIG. 5.

Subsequently, the DEMUX 202 separates various types of data from the broadcast data received by the tuner 201b (S610). In the present embodiment, if various types of data are separated from the broadcast data received by the tuner 201b, the DEMUX 202 separates the various types of data thus separated into data (e.g., broadcast data, related information, and source information) to be displayed on the display 216 of the receiver 200 and data (e.g., related information and source information) to be displayed on the display 306 of the information processor 300 based on output device information contained in the broadcast data (S611).

If the data to be displayed on the display 306 of the information processor 300 contains related information, the communication module 203 refers to the destination information DB stored in the storage module 204, and transmits the related information to the information processor 300 identified by destination information stored in a manner associated with a tuner ID added to the related information (S612). In the present embodiment, the communication module 203 transmits a window ID and a tab ID stored in the destination information DB in a manner associated with the tuner ID added to the related information along with the related information. If no information processor 300 connected via the network 500 is registered, the controller 206 destroys the related information thus acquired.

If the data to be displayed on the display 306 of the information processor 300 contains source information, the web browser 206a acquires related information from a source (e.g., the server 400) identified by the source information. The communication module 203 then refers to the destination information DB stored in the storage module 204, and transmits the related information thus acquired to the information processor 300 identified by destination information stored in a manner associated with a tuner ID added to the source information (S612). In the present embodiment, the communication module 203 transmits a window ID and a tab ID stored in the destination information DB in a manner associated with the tuner ID added to the source information along with the related information thus acquired. While the communication module 203 transmits the related information acquired by the web browser 206a in the present embodiment, it is not limited thereto. If the data to be displayed on the display 306 of the information processor 300 contains source information, the communication module 203 may transmit one of the source information and the related information acquired by the web browser 206a to the information processor 300.

The receiver 200 repeats the processing from S605 to S612 until processing for interrupting reception of the broadcast data is performed (e.g., the case where recording of broadcast data on a channel other than the channel received by the tuner 201 is started) (No at S613). If processing for interrupting reception of the broadcast data is performed (Yes at S613), the controller 206 transmits a message indicating that the receiver 200 fails to receive the broadcast data on the sub channel indicated by the channel information contained in the reception request to the information processor 300 via the communication module 203. At this time, the message transmitted to the information processor 300 may contain information indicating the reason why the receiver 200 interrupts reception of the broadcast data. If processing for interrupting reception of broadcast data on any one of the channels whose broadcast data is being received by the tuner 201 is performed, the receiver 200 stops acquiring related information on broadcast video contained in the broadcast data on the channel and transmitting the related information to the information processor 300. Alternatively, the receiver 200 may acquire related information from a source identified by source information contained in broadcast data received prior to the processing for interrupting reception of the broadcast data and transmit the related information thus acquired to the information processor 300.

While the receiver 200 sequentially repeats the display processing of the broadcast video contained in the broadcast data on the main channel and the transmission processing of the related information on the broadcast video contained in the broadcast data on the main channel, and the transmission processing of the related information on the broadcast video contained in the broadcast data on the sub channel in the present embodiment, it is not limited thereto. Alternatively, the receiver 200 may perform the display processing of the broadcast video contained in the broadcast data on the main channel and the transmission processing of the related information on the broadcast video contained in the broadcast data on the main channel, and the transmission processing of the related information on the broadcast video contained in the broadcast data on the sub channel in parallel or asynchronously, for example.

The display processing of an image in the information processor 300 illustrated in FIG. 6 will now be described. The processing from S621 to S622 in FIG. 6 is identical to the processing from S512 to S513 illustrated in FIG. 5. The communication module 301 receives data (related information) to be displayed on the display 306 of the information processor 300 among the various types of data separated from the broadcast data on the sub channel from the receiver 200 (S623). The web browser 302a analyzes the related information thus received, and transmits the related information to the display controller 304. In the present embodiment, the web browser 302a receives the window ID and the tab ID transmitted from the receiver 200 along with the related information, and transmits the window ID and the tab ID thus received to the display controller 304.

Subsequently, the display controller 304 controls the display 306 so as to display the related information (S624). In the present embodiment, the display controller 304 controls the display 306 such that the related information is displayed in the tab identified by the tab ID among tabs provided to the window identified by the window ID based on the window ID and the tab ID received from the web browser 302a.

If the communication module 301 acquires the related information on the broadcast video contained in the broadcast data on all the channels received by the tuners 201a to 201c for each broadcast data, the display controller 304 controls the display 306 so as to display related information on broadcast video contained in broadcast data on a channel selected by operation input from the operation input module 305 among the related information on the broadcast video contained in the broadcast data on all the channels.

The information processor 300 continues to receive related information and to display the related information until the operation input module 305 generates data corresponding to termination of the display processing of the related information or interruption of the display processing (No at S625). If the information processor 300 (display controller 304) receives the message transmitted from the receiver 200 at S613, the information processor 300 (display controller 304) displays (indicates) the fact that reception of broadcast data on a channel (a channel on which reception of broadcast data is interrupted in the receiver 200) is interrupted in the receiver 200 based on the message. Furthermore, the information processor 300 (display controller 304) may display (indicate) information on the reason why the reception of the broadcast data is interrupted (e.g., the case where recording (programmed recording) of broadcast data on a channel other than the channel being received by the tuner 201 is started) based on the message thus received. If the receiver 200 continues to acquire related information and to transmit the related information after the reception of the broadcast data is interrupted, the information processor 300 (display controller 304) may continue to display the related information on the channel on which reception of the broadcast data is interrupted.

In the present embodiment, the receiver 200 (the web browser 206a and the communication module 203) acquires related information to be displayed on the information processor 300, and transmits the related information to the information processor 300. However, the receiver 200 (the web browser 206a and the communication module 203) may not acquire related information and transmit the related information to the information processor 300. In other words, if the data to be displayed on the display 306 of the information processor 300 contains source information, the receiver 200 (communication module 203) may transmit the source information to the information processor 300, and the information processor 300 (302a) may acquire related information from a source (e.g., the server 400) identified by the source information. If processing for interrupting reception of the broadcast data is performed in the information processor 300 (Yes at S613), the receiver 200 (communication module 203) may transmit the source information received from the information processor 300 before the processing for interruption is performed to the receiver 200. As a result, even after the processing for interrupting reception of the broadcast data is performed in the receiver 200, the information processor 300 (the web browser 302a and the display controller 304) acquires related information from a source (e.g., the server 400) identified by the source information transmitted from the receiver 200, and continues to display the related information thus acquired on the display 306. However, after the processing for interrupting reception of the broadcast data is performed in the receiver 200, source information for identifying a source of the related information on the channel on which reception of the broadcast data is interrupted may possibly be changed. In this case, it is preferable that the information processor 300 (display controller 304) continue to display the related information even after the processing for interrupting reception of the broadcast data is performed and display (indicate) the fact that reception of the broadcast data is interrupted.

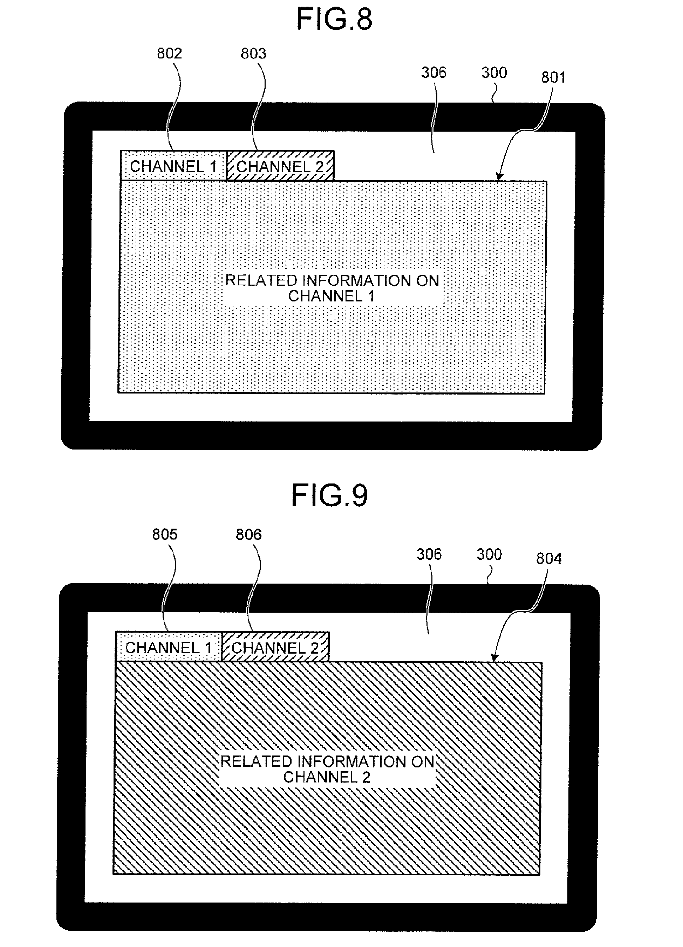

An example of the related information to be displayed on the information processor 300 will now be described with reference to FIG. 8 and FIG. 9. FIG. 8 and FIG. 9 are schematic diagrams of an example of the related information displayed on the information processor in the present embodiment. In the description below, the information processor 300 displays related information (hereinafter, referred to as related information on the channel 1) contained in broadcast data on the main channel (channel 1) and related information (hereinafter, referred to as related information on the channel 2) contained in broadcast data on the sub channel (channel 2) on the display 306, for example.

To display the related information on the channel 2 in addition to the related information on the channel 1 on the display 306, the user of the information processor 300 transmits a reception request for requesting reception of broadcast data on the channel 2 to the receiver 200 by operation input through the operation input module 305. As a result, the communication module 301 receives the related information on the channel 2 in addition to the related information on the channel 1.

Based on a window ID and a tab ID received along with the related information on the channel 1, the display controller 304 controls the display 306 so as to display the related information on the channel 1 on a tab 802 identified by the tab ID between tabs 802 and 803 of a window 801 identified by the window ID.

Furthermore, based on a window ID and a tab ID received along with the related information on the channel 2, the display controller 304 controls the display 306 so as to display the related information on the channel 2 on a tab 806 identified by the tab ID between tabs 805 and 806 of a window 804 identified by the window ID.

On the display 306 of the information processor 300 illustrated in FIG. 8, the tab 802 is selected by operation input from the operation input module 305, and the related information on the channel 1, which is the main channel, is displayed. By contrast, on the display 306 of the information processor 300 illustrated in FIG. 9, the tab 806 is selected by operation input from the operation input module 305, and the related information on the channel 2, which is the sub channel, is displayed.

As described above, according to the display control system according to the present embodiment, the information processor 300 can acquire related information on broadcast video on a sub channel not being displayed on the receiver 200. Therefore, the user can check for the related information on the broadcast video contained in broadcast data on the sub channel with the information processor 300 while viewing broadcast video contained in broadcast data on a main channel specified by the user.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A transmitter (200) comprising:
a plurality of tuners (201a to 201c) configured to be capable of receiving broadcast data containing broadcast video;
a controller (206) configured to control the tuners (201a to 201c) to receive the broadcast data on a main channel that is a channel being displayed on a display device (216) and on a sub channel that is at least one of channels not being displayed on the display device (216);
an acquisition module (202, 206a) configured to acquire related information on the broadcast video for each of the broadcast data thus received; and
a transmitting module (203) configured to transmit the related information corresponding to the sub channel to an information processor (300).

2. The transmitter (200) of Claim 1, further comprising:
a receiver (212) configured to receive, from the information processor (300), channel information indicating the sub channel on which the broadcast data is received, wherein
the controller (206) is configured to control the tuners (201a to 201c) to receive the broadcast data on the sub channel indicated by the channel information thus received.

3. The transmitter (200) of Claim 1, wherein
the related information is acquired via an electric telecommunication line (500),
the tuners (201a to 201c) are configured to receive the broadcast data containing source information for identifying a source of the related information, and
the acquisition module (202, 206a) is configured to acquire the related information from the source (400) identified by the source information contained in the broadcast data thus received via the electric telecommunication line (500).

4. The transmitter (200) of Claim 1, further comprising:
a storage module (204) configured to store therein tuner information for identifying the tuners (201a to 201c) and destination information for identifying the information processor (300) that is a destination of the related information in association with each other, wherein
the transmitting module (203) is configured to refer to the storage module (204), and to transmit the related information corresponding to the sub channel to the information processor (300) identified by the destination information stored in association with the tuner information of the tuners (201a to 201c) that receive the broadcast data on the sub channel.

5. The transmitter (200) of Claim 1, wherein the transmitting module (203) is configured to transmit at least one of source information that is contained in the received broadcast data and is used for identifying a source (400) of the related information and the related information acquired by the acquisition module (202, 206a), to the information processor (300).

6. A transmitting method performed by a transmitter (200) that comprises a plurality of tuners (201a to 201c) configured to be capable of receiving broadcast data containing broadcast video, the transmitting method comprising:
controlling, by a controller (206), the tuners (201a to 201c) to receive the broadcast data on a main channel that is a channel being displayed on a display device (216) and on a sub channel that is at least one of channels not being displayed on the display device (216);
acquiring related information on the broadcast video for each of the broadcast data thus received; and
transmitting the related information corresponding to the sub channel to an information processor (300).

7. A display control system in which a transmitter (200) that comprises a plurality of tuners (201a to 201c) configured to be capable of receiving broadcast data containing broadcast video and an information processor (300) that comprises a display (306) displaying related information on the broadcast video received by the tuners (201a to 201c) are connected via a network (500),
the transmitter (200) comprising:
a controller (206) configured to control the tuners (201a to 201c) so as to receive the broadcast data on a main channel that is a channel being displayed on a display device (216) and on a sub channel that is at least one of channels not being displayed on the display device (216);
an acquisition module (202, 206a) configured to acquire related information on the broadcast video for each of the broadcast data thus received; and
a transmitting module (203) configured to transmit the related information corresponding to the sub channel to the information processor (300), and
the information processor (300) comprising:
a receiver configured to receive the related information transmitted from the transmitter (200); and
a display controller (304) configured to cause the display (306) to display the related information thus received.
